# EUROPEAN PATENT SPECIFICATION

(11) **EP 2 773 541 B1**
(45) Date of publication and mention of the grant of the patent: **17.08.2016**
(21) Application number: 12790451.4
(22) Date of filing: 31.10.2012
(51) Int. Cl.: B60S 3/04, B60S 3/06, B05B 13/04

(54) **IMPROVED DEVICE FOR THE WASHING OF THE WHEELS OF A VEHICLE IN A VEHICLES WASHING INSTALLATION AND RESPECTIVE NEW WASHING CYCLES PERFORMED WITH THIS DEVICE**
VERBESSERTE VORRICHTUNG ZUM WASCHEN DER RÄDER EINES FAHRZEUGES IN EINER FAHRZEUGWASCHANLAGE UND ENTSPRECHENDE MIT DIESER VORRICHTUNG AUSGEFÜHRTE NEUE WASCHZYKLEN
DISPOSITIF AMÉLIORÉ POUR LE LAVAGE DES ROUES D'UN VÉHICULE DANS UNE INSTALLATION DE LAVAGE DE VÉHICULES ET NOUVEAUX CYCLES DE LAVAGE RESPECTIFS RÉALISÉS À L'AIDE DE CE DISPOSITIF

(30) Priority: 03.11.2011 IT MI20111997
(43) Date of publication of application: 10.09.2014
(73) Proprietor: Autoequip Lavaggi S.p.A., 14059 Vesime (AT) (IT)
(72) Inventor: MURIALDI, Michele, I-14059 Vesime (AT) (IT)
(74) Representative: Banfi, Paolo
(86) International application number: PCT/EP2012/071626
(87) International publication number: WO 2013/064574

(56) References cited:
- FR-A1- 2 660 611
- US-A- 3 496 908
- US-A- 4 716 916
- US-B1- 6 277 207

## Description

### Technical field of the invention

The present invention relates in general to the field of installations for the washing of motor vehicles, and more particularly it relates to a device which is specifically intended for the washing of the wheels of a motor vehicle to be washed in one of these washing installations.

### Background of the invention and state of the prior art

Washing installations for motor vehicles, currently available and in use on the market, often integrate functions and/or one or more devices specifically designed for and dedicated to the washing of the wheels, i.e. of the respective rims, of the single motor vehicle which is intended to be washed in the same washing installation.

This device for the washing of the wheels of a vehicle is additional with respect to the other means and devices, such as rotary brushes, vertical and horizontal, nozzles for ejecting detergent products and water under pressure, blowing mouths, etc., which, as is known, equip the installation for the purpose of performing the complete washing of the vehicle, and in particular of its external bodywork.

In use these known devices for the washing of the wheels of a vehicle, integrated as mentioned in a more general and complex installation for washing motor vehicles, are provided for dispensing on the wheel to be washed both a specific fluid chemical product suitable for assisting its washing and water at high pressure in the form of jets.

In this way the mechanical action of the jets of water at high pressure, in combination with the use of the specific chemical product, determines the removal of the dirt and of the encrustations deposited on the rim of the wheel and therefore the washing of the same wheel.

Therefore, thanks to the presence of these devices, it is possible to obtain a more complete and effective washing of the vehicle, in particular of the area of its wheels, as part of the overall cycle of washing of the same vehicle.

It is now observed how these known devices do not always achieve the results desired and expected, in terms of efficacy of washing of the wheels of a vehicle, such as to require further improvements aimed at making their action even more incisive.

Moreover, in this field, devices have been tested, for the washing of the wheels of a vehicle, which can also be installed in a more general installation for the washing of motor vehicles, which comprise a rotating member, in turn provided with several rotating arms, each one equipped with one or more nozzles for the dispensing, on the wheel to be washed, of a specific chemical product for the cleaning of the wheels and of water under pressure.

In these devices both the specific product for the wheel and the water under pressure are supplied in successive times to the rotating member by means of a single supply conduit, which therefore is in common with these two fluids, and therefrom are distributed to the respective arms of the rotating member by means of a system of valves which are mounted along these rotating arms.

Therefore these devices, tested, have also not supplied wholly satisfactory results.

For example it has been found that these devices have the risk of pollution, by the specific chemical product used, of the conduits for the supply of the water under pressure, with the consequent potential disadvantage of preventing a good final rinse of the wheel with water under pressure, these two fluids being supplied to the rotating member, albeit in different times, by means of the same supply conduit.

Moreover the discharge of the water from the pipes, should it contain an antifreeze fluid, may be difficult, again due to the possible pollution by the specific chemical product.

Again the construction of this device is somewhat complex due to the presence, in the various rotating arms, of the valves intended to control the flow selectively, by means of these rotating arms, of the water under pressure and of the specific chemical product used for the wheel.

FR-A-2660611 shows the preamble of claim 1.

### Objects and summary of the invention

Therefore a first general object of the present invention is to provide a new device, in turn part of a more complex installation for washing of vehicles and specifically aimed at the washing of the wheels of a vehicle to be washed in this installation, which overcomes the problems and the limits which afflict the devices, of this type, known and currently in use, and in particular are able to ensure a better and more effective cleaning of the wheels of the vehicle as part of its complete cycle of washing.

A second, more limited but no less important, object of the present invention is to provide a series of new, advantageous and more effective cycles of washing specifically aimed at the washing of the wheels of a vehicle, as part of a more extensive and varied cycle of washing during which the vehicle is completely washed.

The aforementioned objects can be considered completely fulfilled by the device for the washing of the wheels of a vehicle, having the features defined by the independent claim 1, and by the cycles of washing of the wheels of a vehicle which can be performed with this device, such as defined by the independent claims 9 and 10.

Particular embodiments of the present invention are defined by the dependent claims.

### Advantages of the invention

There are numerous advantages, partly already implicitly disclosed previously, which are associated with the new device, in accordance with the present invention, for the washing of the wheels of a vehicle, such as those listed herein below purely by way of an example:
- a high quality of the washing of the various parts of the wheel, and in particular of the respective alloy wheel or rim;
- an optimal and uniform dispensing of the specific chemical product on the entire surface of the wheel and of the respective rim to be washed, in particular obtained by means of rotating dispensing arms, with positive effects on the final quality of the washing of the wheel, where in known devices the specific product is usually dispensed only on a certain and restricted area of the rim;
- a single and non-complex construction, made up of a few simple parts, and in particular without valves or similar devices, for the control of the flow of the water under pressure or of the specific chemical product, in the various arms of the rotating member included in this device;
- total absence of pipes and conduits in common between the hydraulic circuit of supply of the water under pressure and that of supply of the specific chemical product used, so as to avoid any risk of pollution between these two fluids;
- a reliable functioning in time without risks of malfunctioning and clogging in the circuit of supply of the water under pressure and of the specific product for the washing of the wheel;
- reduced costs of maintenance;
- a reduction in the overall time of the complete cycle of washing of
the vehicle.

### Brief description of the drawings

These and other objects, features and advantages of the present invention will be made clear and evident by the following description of one of its preferred embodiments, given by way of a non-limiting example with reference to the accompanying drawings, whereof:
Figs. 1A and 1B are two schematic views respectively from one side and in plan of a mobile gantry included in a more extensive installation for the washing of vehicles and in turn including a specific device, in accordance with the present invention, for the washing of the wheels of a vehicle to be washed in this installation;
Figs. 2 and 3 are respectively a perspective view and a side view of the device, of Figs. 1A and 1B, for the washing of the wheels of a vehicle in the more extensive washing installation;
Fig. 4 is a view in longitudinal section of a rotating distributor included in the device for washing of.the wheels of a vehicle of Figs. 1A, 1B, 2 and 3;
Fig. 5 is a diagram of a general supply circuit suitable for supplying the device for washing of the wheels of a vehicle of Figs. 1A, 1B, 2 and 3 with water under pressure and a specific product suitable for the washing of the wheels;
Fig. 6 is a diagram which shows, in succession, the various phases of a first cycle of washing of the wheels of a vehicle performed with the washing device of Figs. 1A, 1B, 2 and 3;
Fig. 7 is a diagram which shows, in succession, the various phases of a second cycle of washing of the wheels of a vehicle performed with the washing device of Figs. 1A, 1B, 2 and 3; and
Figs. 8A, 8B and 8C are photographic views of an example of the device for washing of the wheels of a vehicle of Figs. 1A, 1B, 2 and 3, mounted in a more general washing installation, and of some auxiliary devices of this washing device.

### Description of a preferred embodiment of the device of the invention for the washing of the wheels of a vehicle

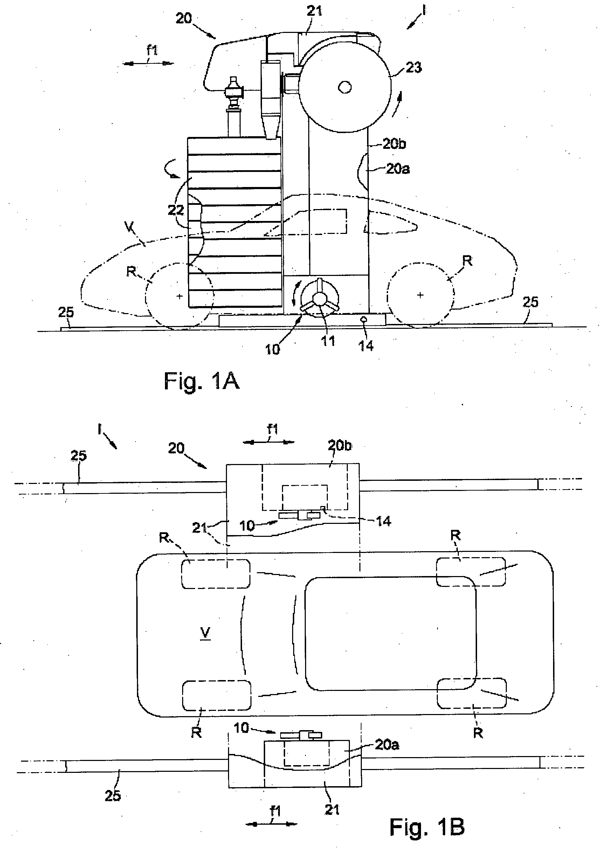

Referring to the drawings and in particular to Figs. 1A and 1B, a device, in accordance with the present invention, for the washing of the wheels of a vehicle V is denoted as a whole by 10 and is part of a more extensive and complex installation, denoted by I, for the complete washing of the vehicle V.

The general features of the washing installation I are substantially known and therefore will not be described in detail.

It is only pointed out that the installation I can be of various types, for example with single gantry, or with double gantry, i.e. made up of two gantries which move one in relation to the other during the cycle of washing of the vehicle V, or also comprising a higher number of mobile gantries.

For clarity, Figs. 1A and 1B show a typical portal structure or gantry 20, mobile in relation to a vehicle V to be washed, which is included in a washing installation I and is essentially made up of two vertical lateral uprights 20a, 20b and a horizontal upper cross member 21 which connects above the two vertical uprights 20a and 20b.

More particularly the gantry 20 is provided with own motor means, also of known features, suitable for driving a movement of translation of the same gantry 20, and also comprises a plurality of rotary brushes, divided among vertical and horizontal brushes, denoted respectively by 22 and 23, which are associated with a system of nozzles for the emission and dispensing, on the bodywork of the vehicle V to be washed, of water under pressure and of specific emollient and/or detergent substances.

In use the gantry 20 is provided for translating forwards and backwards, as denoted by a double arrow f1, along a rectilinear path in relation to the vehicle V, to be washed, which instead stays still, until completing an entire washing cycle, at the end of which the vehicle V is washed.

For example this rectilinear path can be defined by tracks or guides 25, along which the gantry 20 moves in the two directions in order to wash the vehicle V.

The gantry 20 is also usually equipped with a system of sensors, which are connected to a central unit of control of the general functioning of the washing installation I and are provided in order to perform several functions, for example detecting the effective position of the vehicle V, its side profile, and the distance of its two side panels from the two vertical uprights 20a and 20b of the gantry 20, during the forward movement of the same gantry 20 in relation to the vehicle V.

In particular this system of sensors includes a sensor 14, installed in a lower area of a vertical upright 20a or 20b of the gantry 20, which has the specific function of detecting a wheel R of the vehicle V, during the translation of the gantry 20, in order to perform the cycle of washing of the vehicle V, as described better herein below.

Furthermore the gantry 20 is associated with a system of drying, again of known features, having the function of drying the vehicle V, once washed, by blowing thereon a flow of air.

As shown in Figs. 1A and 1B, a device 10, in accordance with the present invention, for the washing of the wheels R of the vehicle V intended to be washed by means of the installation I, is usually installed on each one of the two vertical uprights 20a and 20b of the gantry 20, and more precisely in a lower area of the upright at a height corresponding to that of the wheels R of the vehicle V to be washed.

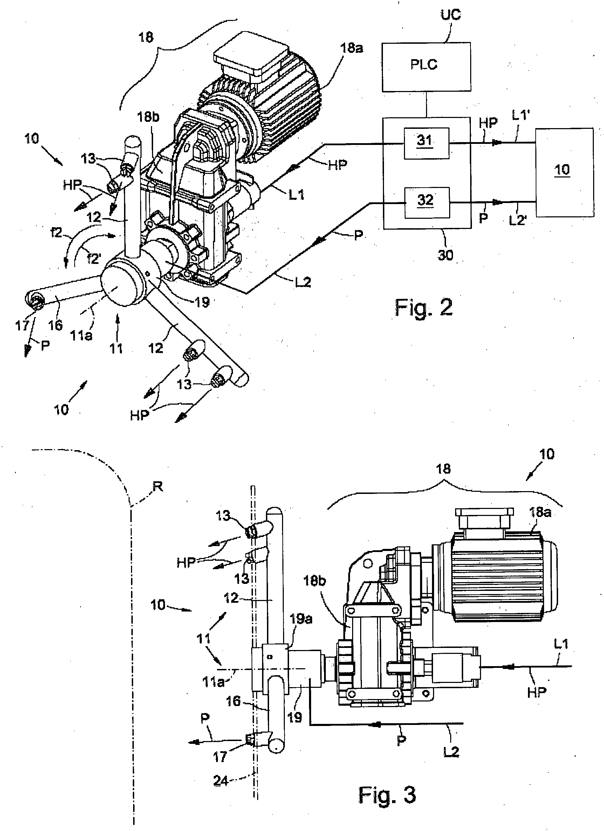

In detail, as shown in Figs. 2 and 3, the washing device 10, for washing the wheels R of the vehicle V, comprises:
- a rotating member 11, suitable for rotating around a respective axis of rotation 11a and in turn comprising at least one first rotating arm 12 for the dispensing of one or more jets of water at high pressure denoted by HP (high pressure) by means of one or more nozzles 13 provided on the same first arm 11; and a second rotating arm 16, for the dispensing of a specific chemical product P for the washing of the wheels of the vehicle V, by means of one or more nozzles 17 provided on the same second arm 16;
- an electric motor assembly 18, suitable for driving the rotation of the rotating member 11 around the respective axis of rotation 11a;
- a general supply circuit, denoted as a whole by 30, for supplying the water under pressure HP and the specific product P to the rotating member 11, and
- a rotating distributor or joint 19 for connecting the general supply circuit 30 to the rotating member 11 and distributing to the latter the water under pressure HP and the specific product P.

The rotating member 11 of the washing device 10 is composed of a central part, in turn constituted by a rotating body 19a of the rotating distributor 19, and, in the preferred embodiment of the invention described here, of three radial arms, which are attached to the base on the rotating body 19a and extend radially from the latter, as shown in Figs. 2 and 3.

These three arms are angularly distanced in a uniform manner, i.e. positioned at approximately 120° one from the other, around the axis 11a, and two arms thereof, denoted by 12, carry each one two nozzles 13 for the emission of the jets of water at high pressure HP, and a third arm, denoted by 16, carries a nozzle 17 for the dispensing of the specific product P.

Both the nozzles 13 and the nozzles 17 are mounted in the end zone, distant from the axis of rotation 11 a, of the respective arms 12 and 16, and are directed in a direction substantially perpendicular to these arms.

It is in any case clear that any other arrangement and number both of the arms and of the nozzles for the emission of the water under pressure HP and the dispensing of the product P, with respect to what is described, are possible and are always to be considered within the present invention.

A circular protection screen 24, schematised with a dotted and dashed line in Fig. 3, can be attached to the rotating body 19a of the distributor 19 so as to rotate integrally therewith, with the purpose of protecting in use the arms 12 and 16 of the rotating member 11.

The electric motor assembly 18, used to rotate the rotating member 11 around the respective axis of rotation 11 a, is of known features and in particular is made up of an electric motor 18a coupled with a reducer 18b.

According to an essential feature of the present invention, the general supply circuit 30 is in turn divided into a first hydraulic supply circuit 31 provided in order to supply the water under pressure HP to the washing device for wheels 10, and into a second hydraulic supply circuit 32 provided for supplying the specific product P to the same washing device 10, wherein these first and second supply circuits 31, 32 are reciprocally separated and configured in such a way as to supply, one independently of the other, i.e. without having conduits and pipes or their portions in common, respectively the rotating arm or arms 12, of the rotating member 11, carrying the nozzle or the nozzles 13 for the emission of the jets of water at high pressure HP, and the rotating arm or arms 16, of the rotating member 11, carrying the nozzle or the nozzles 17 for the dispensing of the specific product P.

Therefore, thanks to this specific configuration of the supply circuit 30 wherein the two circuits 31 and 32 are totally separate and distinct one from the other, the possibility of the flowing of the product P along sections or portions of conduits which are in common also with the circuit of supply of the water under pressure HP is avoided, and therefore the possibility of causing pollution and/or clogging in these conduits which prevents or interferes with the regular flow of the same product P and of the water under pressure HP towards the nozzles, with consequent negative effects on the final efficacy and quality of the washing of the wheels.

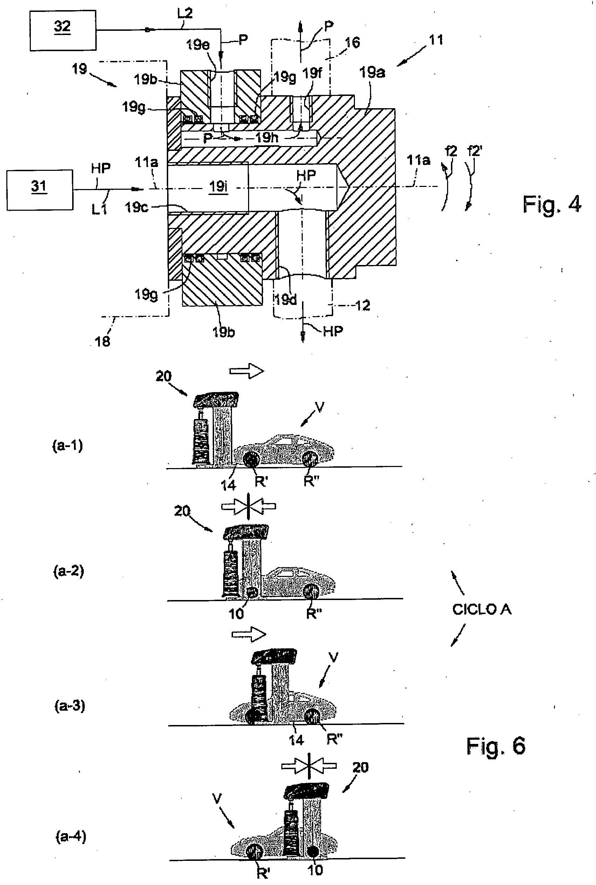

The rotating distributor 19 is also such as to create this distinct separation between the water under pressure HP and the specific product P which are supplied to the rotating member 11 in order to wash the wheel R, and in particular, with reference to Fig. 4, comprises:
- an external fixed body 19b;
- a central rotating body 19a, which extends partially in said fixed external body 19b along the axis 11a of the rotating member 11, whereof it constitutes the central hub or part, wherein this central body 19a is suitable for rotating in relation to the fixed body 19b and around this axis 11a in response to the command of the motor assembly 18;
- a first inlet opening 19c formed along the axis 11a of the central rotating body 19a and suitable for receiving the water under pressure HP from the respective supply circuit 31;
- a first and a second outlet opening 19d, whereof only one is shown in Fig. 4, formed on the periphery of the central rotating body 19a and each one suitable for supplying to a corresponding arm 12 the water under pressure HP coming from the first inlet opening 19c;
- a second inlet opening 19e formed on the periphery of the fixed body 19b and suitable for receiving the specific product P from the respective supply circuit 32, and
- a third outlet opening 19f formed on the periphery of the central rotating body 19a and suitable for supplying to the corresponding arm 16 the specific product P coming from the second inlet opening 19e.

A system of gaskets 19g ensures the seal between the fixed body 19b and the rotating central body 19a during their relative rotation, so as to prevent the specific product P, which flows through the rotating distributor 19 between the inlet opening 19e and the outlet opening 19f, from being able to seep to the outside.

As can be seen from Fig. 4, in the rotating distributor 19 the water under pressure HP and the specific product P are conveyed and distributed along respective conduits, denoted by 19i and 19h, which are totally separate one from the other and do not share any section in common.

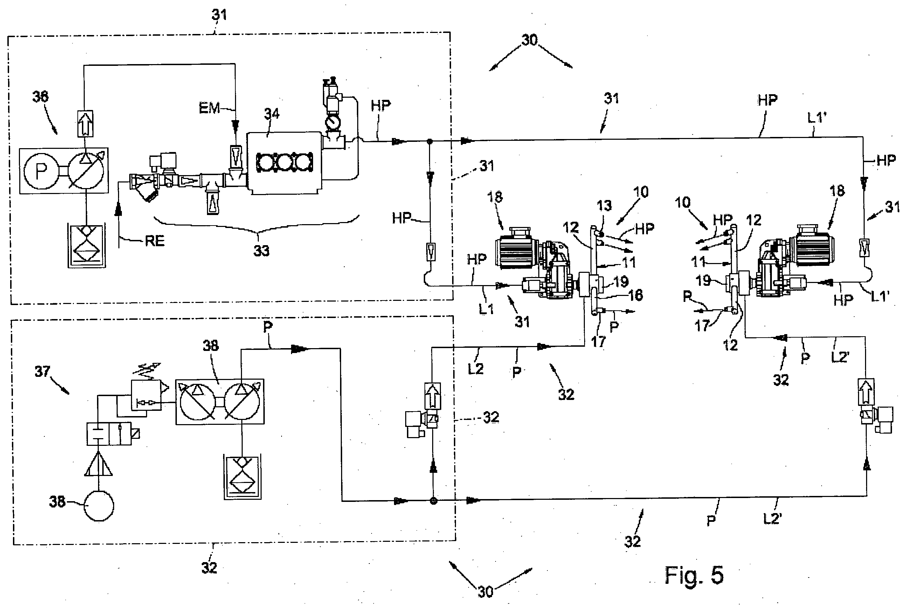

The diagram of Fig. 5 shows as a whole the supply system 30, including the two supply circuits 31 and 32 described previously, in order to supply the water under pressure HP and the specific product P to the rotating distributor 19 and therefore also to the rotating member 11 of two distinct washing assemblies 10, wholly identical one to the other, in accordance with the present invention, each one installed on a corresponding vertical upright 20a, 20b of the gantry 20 of the installation I, in order to wash the wheels R positioned on the two opposite side panels of the vehicle V.

Therefore a first washing device 10 is supplied with water under pressure HP and with the specific product P by means of respective supply lines L1 and L2, reciprocally separate and distinct, defined respectively by the supply circuit 31 and by the supply circuit 32.

Similarly the second washing device 10 is supplied with the water under pressure HP and with the specific product P by means of corresponding supply lines L1' and L2', reciprocally separate and distinct, defined respectively by a supply circuit 31 and by a supply circuit 32, identical to those which supply the first washing device 10.

Moreover the supply system 30 comprises a pressure assembly, generally denoted by 33, common to two washing assemblies 10, of known features and therefore not described in detail, which has the function of generating a flow of water under pressure HP suitable for supplying the supply circuit 31 of each washing assembly 10.

It is made clear only that pressure assembly 33 is provided for receiving the water from the external network RE and compressing it by means of a pump 34 for generating this flow of water under pressure HP.

This pressure assembly 33 can be associated with an emollient assembly, denoted in general by 36 and also of known features, in order to supply an emollient substance EM to be mixed with the water under pressure HP generated by the pressure assembly 33.

Moreover the supply system 30 comprises a product assembly, generally denoted by 37, common to two washing assemblies 10, which contains a reserve of the specific chemical product P to be used for the washing of the wheels R of the vehicle V and has the function of generating a flow of the same product P intended to supply each one of the two washing assemblies 10, via the respective supply circuits 32.

This product assembly 37 is also of known features, and therefore will not be described in detail, only showing in Fig. 5 the unified symbols of the parts and of the components whereof it is constituted.

It is made clear only that the product assembly 37 comprises a metering pump 38, with variable piston displacement, suitable for metering the quantity of the specific product P to be dispensed during the cycle of washing of the wheels, which can be associated with other auxiliary devices, as well known to persons skilled in the art, such as for example a source, denoted by 39, of compressed air, having the function of co-operating with the metering pump 38 in order to generate the flow of the specific product P towards the two washing devices 10.

Naturally the system 30 comprises also a system of valves, as shown by the relative symbols in Fig. 5, which are appropriately located along the conduits and the pipes of this system 30 for the purpose of controlling the flow of the water under pressure HP and of the specific product P.

In the use of the device 10, the central electronic unit UC (Fig. 2), for example made up of a PLC (programmable logic controller), which governs the general functioning of the washing installation I and of the gantry 20 whereof the washing assembly 10 is part, controls, as part of an overall cycle of washing of the vehicle V, the performance, by the device 10, of the specific washing cycle aimed at washing the wheels R of the vehicle V.

In particular, according to the methods established by this overall washing cycle, the gantry 20, moving forwards in relation to the vehicle V to be washed, detects by means of the sensor 14 the position of a first wheel R or pair of wheels R of the vehicle V.

Subsequently, when, after a further forward movement of the gantry 20, the washing device 10 is in front of the wheel R previously detected, the gantry 20 stops immediately.

At this point, therefore with the gantry 20 at a standstill, the control unit UC activates, in successive phases and according to the methods of the cycle which has been established for the washing of the wheel, the product assembly 37 and the pressure assembly 33.

In this way the specific product P and the water under pressure HP are supplied, by means of the respective supply circuits 31 and 32, separate and distinct, and through the rotating distributor 19, to the respective arms 12 and 16 of the rotating member 11 of the washing device 10, as indicated by arrows in Figs. 4 and 5.

Therefore, during the supply to the rotating member 11, the specific product P and the water under pressure HP never flow, even in different times, along sections of conduits or pipes in common, so as to avoid any possibility of pollution between these two fluids.

At the same time the motor assembly 18 drives the rotation of the rotating member 11.

Therefore the member 11, rotating, dispenses, by means of the nozzles 17 provided on the arm 16, the specific product P, and emits, by means of the nozzles 13 provided on the arms 12, a plurality of jets of water under pressure HP, in the direction of the wheel R to be washed.

In particular, both the dispensing of the water under pressure HP and that of the specific product P can be performed, according to a programmed sequence which depends on the specific washing cycle adopted, with the rotating member 11 which rotates in a first time in one direction of rotation and then in a second time in the opposite direction of rotation, as indicated by arrows f2 and f2' in the drawings.

### Examples of preferred and innovative cycles of washing of the wheels of a vehicle which can be performed with the washing device of the invention

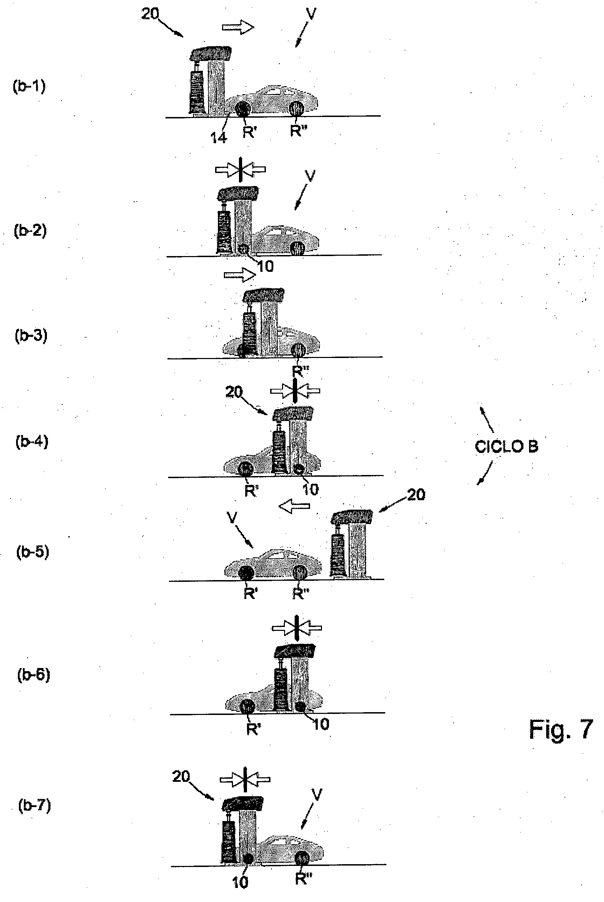

In order to provide information as complete as possible on the features and the various aspects of the present invention, a description will now be given, with reference to Figs. 6 and 7 and supposing for simplicity that the installation I is of the type with mono or single gantry, of some innovative washing cycles, denoted by A and B, which can be performed by means of the new device 10, described previously, for the washing of the wheels R of a vehicle V.

A description will therefore be given, for each washing cycle A, B, of the various single operations, whereof the cycle is constituted, which are performed during the forward and backward passes of the gantry 20, in turn equipped with two distinct washing devices 10 each one installed on a respective vertical upright of the gantry 20.

### Cycle A (Fig. 6)

### Forward pass of the gantry 20

### (a-1) Initial forward movement of the gantry 20 in relation to the vehicle V at a standstill;

- detecting, by means of the appropriate sensor 14, of the front wheels R' of the vehicle V;

### (a-2) stopping of the gantry 20 with the washing devices 10 positioned at the front wheels R' of the vehicle V

- dispensing, by means of the rotating member 11 of the washing devices 10, of the specific product P on the front wheels of the vehicle, with programmed reverse of the direction of rotation of this rotating member 11;
- wait for a predetermined time in order to allow the dispensed specific product P to react;
- dispensing, by means of the rotating member 11 of the washing devices 10, of jets of water under pressure HP on the front wheels R', with programmed reverse of the direction of rotation of the rotating member 11;

### (a-3) further forward movement of the gantry 20;

- detecting, by means of the appropriate sensor 14, of the pair of rear wheels R" of the vehicle V;

### (a-4) stopping of the gantry 20 with the washing devices 10 positioned at the pair of rear wheels R" of the vehicle V;

- dispensing, by means of the rotating member 11 of the washing devices 10, of the specific product P on the rear wheels R" of the vehicle V, with programmed reverse of the direction of rotation of the rotating member 11 of the device 10;
- wait for a predetermined time in order to allow the specific product dispensed on the rear wheels R" to react;
- dispensing, by means of the rotating member 11 of the washing devices 10, of jets of water under pressure HP on the rear wheels R", with programmed reverse of the direction of rotation of the rotating member 11.

### Cycle B (Fig. 7)

### Forward pass of the gantry 20

### (b-1) Initial forward movement of the gantry 20 in relation to the vehicle V at a standstill;

- detecting, by means of the appropriate sensor 14, of the front wheels R' of the vehicle V;

### (b-2) stopping of the gantry 20 with the washing devices for wheels 10 positioned at the front wheels R' of the vehicle V

- dispensing, by means of the rotating member 11 of the washing devices 10, of the specific product P on the front wheels R' of the vehicle, with programmed reverse of the direction of rotation of the rotating member 11;

### (b-3) further forward movement of the gantry 20;

- detecting, by means of the appropriate sensor 14, of the pair of rear wheels R" of the vehicle V;

### (b-4) stopping of the gantry 20 with the washing devices 10 positioned at the pair of rear wheels R" of the vehicle V;

- dispensing, by means of the rotating member 11 of the washing devices 10, of the specific product P on the rear wheels R" of the vehicle V, with reverse of the direction of rotation of the rotating member 11 of the device 10;
- further forward movement of the gantry 20 up to the end of the forward pass.

### Backward pass del gantry 20

### (b-5) initial forward movement of the gantry 20 in relation to the vehicle V at a standstill;

- search for the rear wheels R" of the vehicle V detected during the previous forward pass of the gantry 20;

### (b-6) stopping of the gantry 20 with the washing devices for wheels 10 positioned at the rear wheels R" of the vehicle V

- dispensing, by means of the rotating member 11 of the washing devices 10, of jets of water under pressure HP on the rear wheels R", with programmed reverse of the direction of rotation of the rotating member 11;
further forward movement of the gantry 20;
- search for the rear wheels R' of the vehicle V detected during the previous forward pass of the gantry 20;

### (b-7) stopping of the gantry 20 with the washing devices 10 positioned at the front wheels R' of the vehicle V;

- dispensing of jets of water under pressure HP on the front wheels R' of the vehicle V, with programmed reverse of the direction of rotation of the rotating member 11.

The cycles A and B, described previously, for the washing of the wheels of a vehicle V, are normally part of a more complex and varied cycle, for the complete washing of the vehicle V, which is performed in the washing installation I in which the washing device 10 is integrated, and which obviously depends on the features and on the specific type of this installation I, it being possible for example for the latter to be of the mono-gantry type, or with double gantry or also to comprise a higher number of gantries mobile one in relation to the other.

Therefore the possibilities and the combinations which can be achieved of cycles for the complete washing of the vehicle V, including the use of the device 10, are multiple.

It is in any case important that there is no interference between the various phases of the cycle of washing of the wheels of the vehicle V, performed by means of the device 10 in the forms A and B described previously, and the various other phases which define the complete cycle of washing of the vehicle V which is performed in the installation I wherein the washing device 10 for wheels is included.

As is known, these other phases can include the dispensing of emollient/detergent substances, the dispensing of jets of water at high pressure on the side panels and on the other parts of the bodywork of the vehicle, the brushing of the bodywork of the vehicle by means of the vertical and horizontal rotary brushes with which the installation is equipped, and other phases again well known to the persons skilled in the art.

Moreover, even if the cycles of washing A and B described previously provide, at the start, an action on the front wheels of the vehicle and, subsequently, on the rear wheels, it is obvious that this sequence can be reversed, and that therefore the washing cycles can be performed starting from the rear wheels to then continue with the front ones, according to the specific features and functions of the washing installation I wherein these cycles of washing of the wheels of a vehicle are performed.

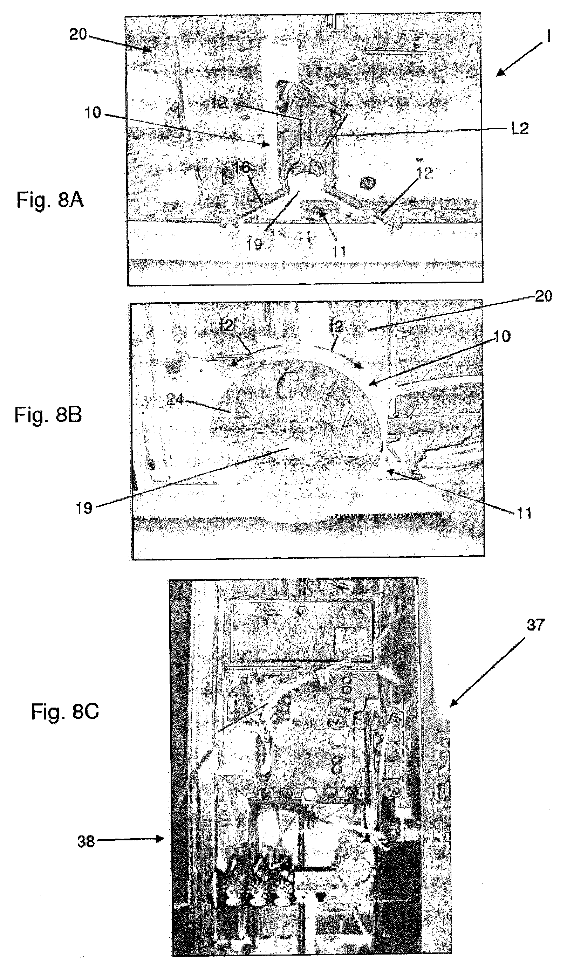

For even more complete information the photographic views of Figs. 8A, 8B show an effective example of the device 10 for washing of the wheels of a vehicle according to the present invention, installed in a mobile gantry 20 of a washing installation I, while the photographic view of Fig. 8C shows the area of the product assembly 37 and in particular of the respective metering pump 38, suitable for metering the quantity of the specific product P to be dispensed during the cycle of washing of the wheels R.

It is therefore clear, from what is described with respect both to the features that qualify the washing device for washing the wheels of a vehicle, and the cycles of washing of a wheel which can be performed with this device, that the present invention fully achieves the objects that had been set, and more particularly provides a new device for washing the wheels of a vehicle which offers significant improvements and better performances with respect to the devices currently known and in use.

In particular the washing device of the invention has a non-complex construction, made up of a few simple parts, characterised by the absence of valves or similar devices, for the control of the flow of the water under pressure or of the specific chemical product, in the various arms of the rotating member included in this device.

Moreover, thanks to the presence in this device of dispensing arms rotating in the two directions according to a programmed sequence, both the specific product and the water under pressure are dispensed in a uniform and effective manner on the various parts of the wheel, and above all on the respective rim, with positive effects on the final quality of the washing of the wheel.

## Claims

1. Washing device (10) for washing the wheels of a vehicle (V) in an installation (I, 20) for the washing of vehicles, comprising:
- a rotating member (11) comprising at least one first rotating arm (12) for dispensing water under pressure (HP) on a wheel (R) of the vehicle (V) by means of one or more nozzles (13) provided on said first rotating arm (12), and at least one second rotating arm (16) for dispensing, on the same wheel (R), a specific chemical product (P) for the washing of the wheels of the vehicle, by means of one or more nozzles (17) provided on said second rotating arm (16);
- an electric motor assembly (18, 18a, 18b), for driving the rotation of said rotating member (11);
- a first hydraulic supply circuit (31) for supplying the water under pressure (HP) to said rotating member (11, 12);
- a second hydraulic supply circuit (32) for supplying said specific product (P) to said rotating member (11, 16), and
- a rotating distributor (19) for connecting said first (31) and said second (32) supply circuits to said rotating member (11) and distributing the water under pressure (HP) and the specific product (P) respectively to said first rotating arm (12) and to said second rotating arm (16);
wherein said first and said second supply circuits (31, 32) are reciprocally distinct without having any conduit in common and are configured, together with said rotating distributor (19), in such a way as to supply and distribute, one separately from the other, the water under pressure (HP) and the specific chemical product (P), respectively to said first (12) and to said second (16) rotating arm of the rotating member (11).

2. Device for washing (10) the wheels of a vehicle according to claim 1, wherein said rotating arms (12, 16), comprised in said rotating member (11), consist of two rotating arms (12) for the dispensing of water under pressure (HP) on the wheel (R) of the vehicle (V), and of a rotating arm (16) for the dispensing, on the same wheel (R), of the specific chemical product (P) for washing the wheels of the vehicle.

3. Device for washing (10) the wheels of a vehicle according to claim 1 or 2, wherein said rotating distributor (19) in turn comprises:
- a fixed body (19b);
- a rotating body (19a) suitable for rotating, relatively to said fixed body (19b), around an axis of rotation (11a) corresponding to the axis of rotation of said rotating member (11);
- at least one first inlet opening (19c) formed along the axis (11a) of said rotating body (19a) and suitable for receiving the water under pressure (HP) from the respective supply circuit (31);
- at least one first outlet opening (19d) formed in said rotating body (19a) and suitable for supplying to a corresponding arm (12) the water under pressure (HP) coming from said first inlet opening (19c);
- at least one second inlet opening (19e) formed in said fixed body (19b) and suitable for receiving said specific product (P) from the respective supply circuit (32), and
- at least one second outlet opening (19f) formed in said rotating body (19a) and suitable for supplying to the corresponding arm (16) the specific product (P) coming from said second inlet opening (19e),
wherein the two conduits (19i, 19h) between said first inlet opening (19c) and said first outlet opening (19d) and between said second inlet opening (19e) and said second outlet opening (19f), for the flow through said rotating distributor (19) respectively of the water under pressure (HP) and of the specific product (P), are distinct and separate one from the other.

4. Device for washing the wheels of a vehicle (V) according to any one of the preceding claims, wherein said arms (12, 16) extend radially from a rotating body (19a) of said rotating distributor (19) and said nozzles (13, 17) are directed in a direction substantially perpendicular to the respective arms (12, 16).

5. Device for washing the wheels of a vehicle (V) according to any one of the preceding claims, wherein said rotating member (11) is suitable for rotating in the two directions (f2, f2') according to a programmed sequence in order to dispense the water under pressure (HP) and the specific product (P) on the wheel to be washed.

6. Device for washing the wheels of a vehicle (V) according to any one of the preceding claims, associated with a product assembly (37) in order to produce a flow of said specific product (P) in said second hydraulic supply circuit (32), wherein said product assembly (37) comprises a compressed air source suitable for activating said flow.

7. Installation (I) for the washing of motor vehicles comprising a device, according to any one of the preceding claims, for the washing of the wheels of a vehicle (V).

8. Installation (I) for the washing of motor vehicles according to claim 7, comprising:
- at least one mobile gantry (20);
- a device (10) for washing the wheels of a vehicle (V), according to any one of claims 1 to 6, mounted on each of the two vertical uprights (20a, 20b) of said mobile gantry (20);
- a common pressure assembly (36) for producing a flow of said water under pressure (HP) in both first hydraulic supply circuits (31) of the two washing devices mounted on the mobile gantry (20), and
- a common product assembly (37) for producing a flow of said specific product (P) in both second hydraulic supply circuits (32) of the two washing devices mounted on the mobile gantry (20).

9. Cycle of washing (A) of the wheels (R) of a vehicle (V) performed with a wheel washing device (10) included in an installation (I) for washing vehicles and having:
- a rotating member (11) comprising at least one first rotating arm (12) for dispensing water under pressure (HP) on a wheel (R) of the vehicle (V), and at least one second rotating arm (16) for dispensing, on the same wheel (R), a specific chemical product (P) for the washing of the wheels of the vehicle;
- a first hydraulic supply circuit (31) for supplying the water under pressure (HP) to said rotating member (11, 12);
- a second hydraulic supply circuit (32) for supplying said specific product (P) to said rotating member (11, 16), and
- a rotating distributor (19) for connecting said first (31) and said second (32) supply circuits to said rotating member (11) and distributing the water under pressure (HP) and the specific product (P) respectively to said first rotating arm (12) and to said second rotating arm (16);
wherein said first and said second supply circuits (31, 32) are reciprocally distinct without having any conduit in common and are configured, together with said rotating distributor (19), in such a way as to supply and distribute, one separately from the other, the water under pressure (HP) and the specific chemical product (P), respectively to said first (12) and to said second (16) rotating arm of the rotating member (11),
the wheel washing cycle comprising the following steps:
during a forward pass of a gantry (20) of the washing installation (I),
- moving forwards (a-1) the gantry (20) and detecting, during this forward movement, at least one first wheel (R) of a first pair of wheels of the vehicle (V) to be washed;
- stopping (a-2) the gantry (20) in front of the first wheel (R), previously detected;
- dispensing (a-2) on the first wheel a specific product (P) suitable for washing it, reversing (f2, f2') in a programmed manner the direction of rotation of the dispensing rotating member (11) of the washing device (10);
- dispensing (a-2), after a predetermined time such as to allow the dispensed specific product (P) to react, jets of water under pressure (HP) on the wheel, reversing in a programmed manner the direction of rotation of the rotating member (11);
- further moving forwards (a-3) the gantry and detecting during this further forward movement at least one second wheel (R) of the remaining wheels of the vehicle to be washed;
- stopping (a-4) the gantry (20) in front of the second wheel (R), previously detected;
- dispensing (a-4) on the second wheel a specific product (P) suitable for washing it, reversing (f2, f2') in a programmed manner the direction of rotation of the dispensing rotating member (11) of the washing device (10);
- dispensing, after a predetermined time such as to allow the dispensed specific product (P) to react, jets of water under pressure (HP) on the second wheel, reversing in a programmed manner the direction of rotation of the rotating member (11).

10. Cycle of washing (B) of the wheels (R) of a vehicle (V) performed with a wheel washing device (10) included in an installation (I) for washing vehicles and having:
- a rotating member (11) comprising at least one first rotating arm (12) for dispensing water under pressure (HP) on a wheel (R) of the vehicle (V), and at least one second rotating arm (16) for dispensing, on the same wheel (R), a specific chemical product (P) for the washing of the wheels of the vehicle;
- a first hydraulic supply circuit (31) for supplying the water under pressure (HP) to said rotating member (11, 12);
- a second hydraulic supply circuit (32) for supplying said specific product (P) to said rotating member (11, 16), and
- a rotating distributor (19) for connecting said first (31) and said second (32) supply circuits to said rotating member (11) and distributing the water under pressure (HP) and the specific product (P) respectively to said first rotating arm (12) and to said second rotating arm (16);
wherein said first and said second supply circuits (31, 32) are reciprocally distinct without having any conduit in common and are configured, together with said rotating distributor (19), in such a way as to supply and distribute, one separately from the other, the water under pressure (HP) and the specific chemical product (P), respectively to said first (12) and to said second (16) rotating arm of the rotating member (11),
the wheel washing cycle comprising the following steps:
during a forward pass of a gantry (20) of the washing installation (I),
- moving forwards (b-1) the gantry (20) and detecting, during this forward movement, at least one first wheel (R') of a first pair of wheels of the vehicle (V) to be washed;
- stopping (b-2) the gantry (20) in front of the first wheel (R'), previously detected;
- dispensing (b-2) on the first wheel a specific product (P) suitable for washing it, reversing (f2, f2') in a programmed manner the direction of rotation of the dispensing rotating member (11) of the washing device (10);
- further moving forwards (b-3) the gantry and detecting during this further forward movement at least one second wheel (R") of the remaining wheels of the vehicle to be washed;
- stopping (b-4) the gantry (20) in front of the second wheel (R"), previously detected;
- dispensing (b-4) on the second wheel (R") the specific product (P) suitable for washing it, reversing (f2, f2') in a programmed manner the direction of rotation of the dispensing rotating member (11) of the washing device (10);
- completing (b-5) the forward pass of the gantry (20);
- during a subsequent backward pass of the gantry (20) of the washing installation (I)
- initially moving forwards (b-6) the gantry (20) and stopping it in front of the second wheel (R") detected during the previous forward pass;
- dispensing (b-4) jets of water under pressure (HP) on the second wheel (R"), reversing (f2, f2') in a programmed manner the direction of rotation of the rotating member (11);
- further moving forwards the gantry (20) and stopping it (b-7) in front of the first wheel (R') detected during the previous forward pass;
- dispensing (b-7) jets of water under pressure (HP) on the second wheel (R"), reversing (f2, f2') in a programmed manner the direction of rotation of the rotating member (11).

## Patentansprüche

1. Waschvorrichtung (10) zum Waschen der Räder eines Fahrzeugs (V) in einer Anlage (I, 20) zum Waschen von Fahrzeugen, aufweisend:
- ein Rotationselement (11), aufweisend mindestens einen ersten Rotationsarm (12) zum Abgeben von Wasser unter Druck (HP) auf ein Rad (R) des Fahrzeugs (V) mittels einer oder mehrerer Düsen (13), welche an dem ersten Rotationsarm (12) angeordnet sind, und mindestens einen zweiten Rotationsarm (16) zum Abgeben eines spezifischen chemischen Produkts (P) auf dasselbe Rad (R) für das Waschen der Räder des Fahrzeugs mittels einer oder mehrerer Düsen (17), welche am zweiten Rotationsarm (16) angeordnet sind;
- eine elektrische Motoranordnung (18, 18a, 18b) zum Antreiben der Rotation des Rotationselements (11);
- eine erste hydraulische Versorgungsleitung (31) zum Zuführen des Wassers zu dem Rotationselement (11, 12) unter Druck (HP);
- eine zweite hydraulische Versorgungsleitung (32) zum Zuführen des spezifischen Produkts (P) zum Rotationselement (11, 16), und
- eine Rotationsverteiler (19) zum Verbinden der ersten (31) und zweiten (32) Versorgungsleitung mit dem Rotationselement (11) und zum Verteilen des Wassers unter Druck (HP) beziehungsweise des spezifischen Produkts (P) an den ersten Rotationsarm (12) und an den zweiten Rotationsarm (16);
wobei die erste und zweite Versorgungsleitung (31, 32) sich gegenseitig voneinander unterscheiden, ohne dass sie irgendeine Leitung gemeinsam aufweisen, und zusammen mit dem Rotationsverteiler (19) derart ausgestaltet sind, dass sie jeweils unabhängig voneinander das Wasser unter Druck (HP) beziehungsweise das spezifische chemische Produkt (P) zum ersten (12) und zweiten (16) Rotationsarm des Rotationselements (11) zuführen und verteilen.

2. Vorrichtung zum Waschen (10) der Räder eines Fahrzeugs gemäß Anspruch 1, wobei die, in dem Rotationselement (11) aufgenommenen, Rotationsarme (12, 16) aus zwei Rotationsarmen (12) zum Abgeben von Wasser unter Druck (HP) auf das Rad (R) des Fahrzeugs (V) und einem Rotationsarm (16) zum Abgeben des spezifischen chemischen Produkts (P) auf dasselbe Rad (R) fürs das Waschen des Fahrzeugs bestehen.

3. Vorrichtung zum Waschen (10) der Räder eines Fahrzeugs gemäß Anspruch 1 oder 2, wobei der Rotationsverteiler (19) wiederum aufweist:
- einen fixierten Körper (19b);
- einen Rotationskörper (19a), geeignet zum Rotieren relativ zum fixierten Körper (19b) um eine Rotationsachse (11a), welche mit der Rotationsachse des Rotationselements (11) übereinstimmt;
- mindestens eine erste Einlassöffnung (19c), welche entlang der Achse (11a) des Rotationskörpers (19a) ausgebildet ist und welche zum Aufnehmen des Wassers unter Druck (HP) von der zugehörigen Versorgungsleitung (31) geeignet ist;
- mindestens eine erste Auslassöffnung (19d), welche im Rotationskörper (19a) ausgebildet ist und zum Zuführen des von der ersten Einlassöffnung (19c) kommenden Wassers unter Druck (HP)zu einem zugehörigen Arm (12) geeignet ist;
- mindestens eine zweite Einlassöffnung (19e), ausgebildet im fixierten Körper (19b) und geeignet zum Aufnehmen des spezifischen Produkts (P) von der zugehörigen Versorgungsleitung (32), und
- mindestens eine zweite Auslassöffnung (19f), ausgebildet im genannten Rotationskörper (19a) und geeignet zum Zuführen des von der genannten zweiten Einlassöffnung (19e) kommenden, spezifischen Produkts (P) zu dem zugehörigen Arm (16),
wobei die zwei Leitungen (19i, 19h) zwischen der ersten Einlassöffnung (19c) und der ersten Auslassöffnung (19d) und zwischen der zweiten Einlassöffnung (19e) und der zweiten Auslassöffnung (19f) für den Fluss des Wassers unter Druck (HP) beziehungsweise des spezifischen Produkts (P) durch den Rotationverteiler (19) unterschiedlich und getrennt voneinander sind.

4. Vorrichtung zum Waschen der Räder eines Fahrzeugs (V) gemäß einem der vorhergehenden Ansprüche, wobei sich die Arme (12, 16) in radialer Weise von einem Rotationskörpers (19a) des Rotationsverteilers (19) erstrecken, und die Düsen (13, 17) in eine im Wesentlichen senkrecht zu den zugehörigen Armen (12, 16) orientierte Richtung gerichtet sind.

5. Vorrichtung zum Waschen der Räder eines Fahrzeugs (V) gemäß einem der vorhergehenden Ansprüche, wobei das Rotationselement (11) zum Rotieren in die zwei Richtungen (f2, f2') gemäß einer programmierten Abfolge geeignet ist, um das Wasser unter Druck (HP) und das spezifische Produkt (P) auf das zu waschenden Rad abzugeben.

6. Vorrichtung zum Waschen der Räder eines Fahrzeugs (V) gemäß einem der vorhergehenden Ansprüche, in Verbindung gebracht mit einer Produktanordnung (37), um einen Fluss des spezifischen Produkts (P) in die zweite hydraulische Versorgungsleitung (32) zu erstellen, wobei die Produktanordnung (37) eine Druckluftquelle aufweist, welche zum Aktivieren des Flusses geeignet ist.

7. Anlage (I) zum Waschen motorisierter Fahrzeuge, aufweisend eine Vorrichtung zum Waschen der Räder eines Fahrzeugs (V) gemäß einem der vorhergehenden Ansprüche.

8. Anlage (I) zum Waschen motorisierter Fahrzeugs gemäß Anspruch 7, aufweisend:
- mindestens ein bewegliches Gerüst (20);
- eine Vorrichtung (10) zum Waschen der Räder eines Fahrzeugs (V) gemäß einem der Ansprüche 1 bis 6, angebracht an jedem der zwei vertikalen Ständer (20a, 20b) des beweglichen Gerüsts (20);
- eine gemeinsame Druckanordnung (36) zum Erstellen eines Flusses des Wassers unter Druck (HP) in beiden ersten hydraulischen Versorgungsleitungen (31) der zwei Waschvorrichtungen, welche auf dem beweglichen Gerüst (20) angebracht sind, und
- eine gemeinsame Produktanordnung (37) zum Erstellen eines Flusses des spezifischen Produkts (P) in beiden zweiten hydraulischen Versorgungsleitungen (32) der zwei Waschvorrichtungen, welche auf dem beweglichen Gerüst (20) angebracht sind.

9. Waschzyklus (A) der Räder (R) eines Fahrzeugs (V), durchgeführt mit einer in einer Anlage (I) zum Waschen von Fahrzeugen inkludierten Radwaschvorrichtung (10), und aufweisend:
- ein Rotationselement (11), aufweisend mindestens einen ersten Rotationsarm (12) zum Abgeben von Wasser auf ein Rad (R) des Fahrzeugs (V) unter Druck (HP), und mindestens einen zweiten Rotationsarm (16) zum Abgeben eines spezifischen chemischen Produkts (P) auf dasselbe Rad (R) zum Waschen der Räder des Fahrzeugs;
- eine erste hydraulische Versorgungsleitung (31) zum Zuführen des Wassers zum Rotationselement (11, 12) unter Druck (HP);
- eine zweite hydraulische Versorgungsleitung (32) zum Zuführen des spezifischen Produkts (P) zum Rotationselement (11, 16), und
- ein Rotationsverteiler (19) zum Verbinden der ersten (31) und zweiten (32) Versorgungsleitung mit dem Rotationselement (11) und zum Verteilen des Wassers unter Druck (HP) beziehungsweise des spezifischen Produkts (P) zum ersten Rotationsarm (12) und zum zweiten Rotationsarm (16);
wobei die erste und zweite Versorgungsleitung (31, 32) sich gegenseitig voneinander unterscheiden, ohne dass sie irgendeine gemeinsame Leitung aufweisen, und zusammen mit dem Rotationsverteiler (19) derart ausgestaltet sind, dass sie jeweils getrennt voneinander das Wasser unter Druck (HP) beziehungsweise das spezifische chemische Produkt (P) zum ersten (12) und zweiten (16) Rotationsarm des Rotationselements (11) zuführen und verteilen,
wobei der Radwaschzyklus die folgenden Schritte aufweist:
während eines nach vorne Voranschreitens eines Gerüsts (20) der Waschanlage (I),
- nach vorne Bewegen (a-1) des Gerüsts (20) und Detektieren von mindestens einem ersten Rad (R) eines ersten Paares an Rädern des zu waschenden Fahrzeugs (V) während dieses nach vorne Bewegens;
- Anhalten (a-2) des Gerüsts (20) vor dem ersten, zuvor detektierten Rades (R);
- Abgeben (a-2) eines spezifischen Produkts (P) auf ein erstes Rad, wobei das spezifische Produkt (P) geeignet ist das erste Rad zu waschen, Umkehren (f2, f2') der Rotationsrichtung des abgebenden Rotationselements (11) der Waschvorrichtung (10) auf programmierte Weise;
- Abgeben (a-2) von Wasserstrahlen auf das Rad unter Druck (HP) nach einer vorbestimmten Zeit, welche es dem abgegebenen spezifischen Produkt (P) ermöglicht zu reagieren, Umkehren der Rotationsrichtung des Rotationselements (11) auf programmierte Weise;
- Weiterbewegen des Gerüsts nach vorne (a-3) und Detektieren von mindestens einem zweiten Rad (R) der verbleibenden Räder des zu waschenden Fahrzeugs während dieser weiteren Bewegung nach vorne;
- Anhalten (a-4) des Gerüsts (20) vor dem zweiten, zuvor detektierten Rad (R);
- Abgeben (a-4) eines spezifischen Produkts (P) auf das zweite Rad, wobei das spezifische Produkt geeignet ist das zweite Rad zu waschen, Umkehren (f2, f2') der Rotationsrichtung des abgebenden Rotationselements (11) der Waschvorrichtung (10) auf programmierte Weise;
- Abgeben von Wasserstrahlen auf das zweite Rad unter Druck (HP) nach einer vorbestimmten Zeit, welche es dem abgegebenen spezifischen Produkt (P) ermöglicht zu reagieren, Umkehren der Rotationsrichtung des Rotationselements (11) auf programmierte Weise;

10. Waschzyklus (B) der Räder (R) eines Fahrzeugs (V), durchgeführt mit einer Radwaschvorrichtung (10), welche in einer Anlage (I) zum Waschen von Fahrzeugen inkludiert ist und aufweist:
- ein Rotationselement (11), aufweisend mindestens einen ersten Rotationsarm (12) zum Abgeben von Wasser auf ein Rad (R) des Fahrzeugs (V) unter Druck (HP), und mindestens ein zweiter Rotationsarm (16) zum Abgeben eines spezifischen chemischen Produkts (P) auf dasselbe Rad (R) zum Waschen der Räder des Fahrzeugs;
- eine erste hydraulische Versorgungsleitung (31) zum Zuführen des Wassers zu dem Rotationselement (11, 12) unter Druck (HP);
- eine zweite hydraulische Versorgungsleitung (32) zum Zuführen des spezifischen Produkts (P) zu dem Rotationselement (11, 16), und
- ein Rotationsverteiler (19) zum Verbinden der ersten (31) und zweiten (32) Versorgungsleitung mit dem genannten Rotationselement (11) und zum Verteilen des Wassers unter Druck (HP) beziehungsweise des spezifischen Produkts (P) zu dem genannten ersten Rotationsarm (12) und dem zweiten Rotationsarm (16);
wobei die erste und zweite Versorgungsleitung (31, 32) gegenseitig unterschiedlich voneinander sind, ohne dass sie irgendeine gemeinsame Leitung aufweisen, und zusammen mit dem Rotationsverteiler (19) derart ausgestaltet sind, dass sie das Wasser unter Druck (HP) beziehungsweise das spezifische chemische Produkt (P) voneinander getrennt zum ersten (12) und zweiten (16) Rotationsarm des Rotationselements (11) zuführen und verteilen,
wobei der Radwaschzyklus die folgenden Schritte aufweist:
während eines Voranschreitens eines Gerüsts (20) der Waschanlage (I) nach vorne,
- Bewegen (b-1) des Gerüsts (20) nach vorne und Detektieren von mindestens einem ersten Rad (R') eines ersten Paares an Rädern des zu waschenden Fahrzeugs (V) während dieses Bewegens nach vorne;
- Anhalten (b-2) des Gerüsts (20) vor dem ersten, zuvor detektierten Rades (R');
- Abgeben (b-2) eines spezifischen Produkts (P) auf ein erstes Rad, wobei das spezifische Produkt geeignet ist das erste Rad zu waschen, Umkehren (f2, f2') der Rotationsrichtung des abgebenden Rotationselements (11) der Waschvorrichtung (10) auf programmierte Weise;
- Weiterbewegen des Gerüsts nach vorne (b-3) und Detektieren von mindestens einem zweiten Rad (R") der verbleibenden Räder des zu waschenden Fahrzeugs während diesem Weiterbewegen nach vorne;
- Anhalten (b-4) des Gerüsts (20) vor dem zweiten, zuvor detektierten Rad (R");
- Abgeben (b-4) des spezifischen Produkts (P) auf das zweite Rad (R''), wobei das spezifische Produkt geeignet ist das zweite Rad zu waschen, Umkehren (f2, f2') der Rotationsrichtung des abgebenden Rotationselements (11) der Waschvorrichtung (10) auf programmierte Weise;
- Vervollständigen (b-5) des Voranschreitens des Gerüsts (20) nach vorne;
- während eines nachfolgenden Voranschreiten des Gerüsts (20) der Waschanlage (I) nach hinten
- anfängliches Bewegen des Gerüsts (20) nach vorne (b-6) und dessen Anhalten vor dem zweiten Rad (R"), welches während des vorherigen Voranschreitens nach vorne detektiert worden ist;
- Abgeben (b-4) von Wasserstrahlen auf das zweite Rad (R") unter Druck (HP), Umkehren (f2, f2') der Rotationsrichtung des Rotationselements (11) auf programmierte Weise;
- Weiterbewegen des Gerüsts (20) nach vorne und dessen Anhalten (b-7) vor dem ersten Rad (R'), welches während des vorherigen Voranschreiten nach vorne detektiert worden ist;
- Abgeben (b-7) von Wasserstrahlen auf das zweite Rad (R") unter Druck (HP), Umkehren (f2, f2') der Rotationsrichtung des Rotationselements (11) auf programmierte Weise.

## Revendications

1. Dispositif de lavage (10) pour le lavage des roues d'un véhicule (V) dans une installation (I, 20) de lavage de véhicules, comprenant :
- un élément rotatif (11) comprenant au moins un premier arbre rotatif (12) pour épandre de l'eau sous pression (HP) sur une roue (R) du véhicule (V) au moyen d'une ou de plusieurs buses (13) prévues sur ledit premier arbre rotatif (12), et au moins un deuxième bras rotatif (16) pour épandre, sur la même roue (R), un produit chimique spécifique (P) pour le lavage des roues du véhicule, au moyen d'une ou de plusieurs buses (17) prévues sur ledit deuxième bras rotatif (16) ;
- un groupe moteur électrique (18, 18a, 18b) pour piloter la rotation dudit élément rotatif (11) ;
- un premier circuit d'alimentation hydraulique (31) pour fournir l'eau sous pression (HP) audit élément rotatif (11, 12) ;
- un deuxième circuit d'alimentation hydraulique (32) pour fournir ledit produit spécifique (P) audit élément rotatif (11, 16) et
- un distributeur rotatif (19) pour relier ledit premier (31) et ledit deuxième (32) circuits d'alimentation audit élément rotatif (11) et distribuer l'eau sous pression (HP) ainsi que le produit spécifique (P) respectivement audit premier bras rotatif (12) et audit deuxième bras rotatif (16) ;
dans lequel ledit premier et ledit deuxième circuit d'alimentation (31, 32) sont réciproquement distincts sans avoir de quelconque conduite commune et sont configurés, ensemble avec ledit distributeur rotatif (19), de telle manière à fournir et distribuer, l'un séparément de l'autre, l'eau sous pression (HP) et le produit chimique spécifique (P), respectivement audit premier (12) et audit deuxième (16) bras rotatif de l'élément rotatif (11).

2. Dispositif de lavage (10) des roues d'un véhicule selon la revendication 1, dans lequel lesdits bras rotatifs (12, 16), compris dans ledit élément rotatif (11), se composent de deux bras rotatifs (12) pour épandre de l'eau sous pression (HP) sur la roue (R) du véhicule (V), et d'un bras rotatif (16) pour épandre, sur la même roue (R), le produit chimique spécifique (P) pour laver les roues du véhicule.

3. Dispositif de lavage (10) des roues d'un véhicule selon la revendication 1 ou 2, dans lequel ledit distributeur rotatif (19) comprend quant à lui :
- un corps fixe (19b) ;
- un corps rotatif (19a) approprié afin de décrire une rotation par rapport audit corps fixe (19b), autour d'un axe de rotation (11a) correspondant à l'axe de rotation dudit élément rotatif (11) ;
- au moins un premier orifice d'entrée (19c) formé le long de l'axe (11a) dudit corps rotatif (19a) et approprié afin de recevoir l'eau sous pression (HP) du circuit d'alimentation respectif (31) ;
- au moins un premier orifice de sortie (19d) formé dans ledit corps rotatif (19a) et approprié afin de fournir à un bras correspondant (12) l'eau sous pression (HP) venant dudit premier orifice d'entrée (19c) ;
- au moins un deuxième orifice d'entrée (19e) formé dans ledit corps fixe (19b) et approprié afin de recevoir ledit produit spécifique (P) du circuit d'alimentation respectif (32), et
au moins un deuxième orifice de sortie (19f) formé dans ledit corps rotatif (19a) et approprié afin de fournir au bras correspondant (16) le produit spécifique (P) venant dudit deuxième orifice d'entrée (19e), dans lequel les deux conduits (19i, 19h) entre ledit premier orifice d'entrée (19c) et ledit premier orifice de sortie (19d) et entre ledit deuxième orifice d'entrée (19e) et ledit deuxième orifice de sortie (19f), pour l'écoulement à travers ledit distributeur rotatif (19) respectivement de l'eau sous pression (HP) et du produit spécifique (P), sont distincts et séparés l'un de l'autre.

4. Dispositif de lavage des roues d'un véhicule (V) selon l'une quelconque des revendications précédentes, dans lequel lesdits bras (12, 16) s'étendent radialement au départ d'un corps rotatif (19a) dudit distributeur rotatif (19) et lesdites buses (13, 17) sont dirigées substantiellement à la perpendiculaire par rapport aux bras respectifs (12, 16).

5. Dispositif de lavage des roues d'un véhicule (V) selon l'une quelconque des revendications précédentes, dans lequel ledit élément rotatif (11) est approprié afin de décrire une rotation dans les deux directions (f2, f2') selon une séquence programmée afin d'épandre l'eau sous pression (HP) et le produit spécifique (P) sur la roue à laver.

6. Dispositif de lavage des roues d'un véhicule (V) selon l'une quelconque des revendications précédentes, associé à un assemblage de produits (37) afin de produire un écoulement dudit produit spécifique (P) dans ledit deuxième circuit d'alimentation hydraulique (32), dans lequel ledit assemblage de produits (37) comprend une source d'air comprimé appropriée afin d'activer ledit écoulement.

7. Installation (I) de lavage de véhicules à moteur comprenant un dispositif selon l'une quelconque des revendications précédentes, pour le lavage des roues d'un véhicule (V).

8. Installation (I) de lavage de véhicules à moteur selon la revendication 7, comprenant :
- au moins un portique mobile (20) ;
- un dispositif (10) de lavage des roues d'un véhicule (V), selon l'une quelconque des revendications 1 à 6, monté sur chacun des deux montants verticaux (20a, 20b) dudit portique mobile (20) ;
- un assemblage de pression commun (36) afin de produire un écoulement de ladite eau sous pression (HP) dans les deux premiers circuits d'alimentation hydrauliques (31) des deux dispositifs de lavage montés sur le portique mobile (20), et
- un assemblage de produits commun (37) afin de produire un écoulement dudit produit spécifique (P) dans les deux deuxièmes circuits d'alimentation hydrauliques (32) des deux dispositifs de lavage montés sur le portique mobile (20).

9. Cycle de lavage (A) des roues (R) d'un véhicule (V) réalisé avec un dispositif pour le lavage des roues (10) compris dans une installation (I) de lavage de véhicules et possédant :
- un élément rotatif (11) comprenant au moins un premier arbre rotatif (12) pour épandre de l'eau sous pression (HP) sur une roue (R) du véhicule (V), et au moins un deuxième bras rotatif (16) pour épandre, sur la même roue (R), un produit chimique spécifique (P) pour le lavage des roues du véhicule ;
- un premier circuit d'alimentation hydraulique (31) pour fournir l'eau sous pression (HP) audit élément rotatif (11, 12);
- un deuxième circuit d'alimentation hydraulique (32) pour fournir ledit produit spécifique (P) audit élément rotatif (11, 16) et
- un distributeur rotatif (19) pour relier ledit premier (31) et ledit deuxième (32) circuits d'alimentation audit élément rotatif (11) et distribuer l'eau sous pression (HP) ainsi que le produit spécifique (P) respectivement audit premier bras rotatif (12) et audit deuxième bras rotatif (16) ;
dans lequel ledit premier et ledit deuxième circuit d'alimentation (31, 32) sont réciproquement distincts sans avoir de quelconque conduite commune et sont configurés, ensemble avec ledit distributeur rotatif (19), de telle manière à fournir et distribuer, l'un séparément de l'autre, l'eau sous pression (HP) et le produit chimique spécifique (P), respectivement audit premier (12) et audit deuxième (16) bras rotatif de l'élément rotatif (11), le cycle de lavage des roues comprenant les étapes suivantes : durant un déplacement du portique (20) de l'installation de lavage (I) vers l'avant,
- avancée (a-1) du portique (20) et détection, durant ce mouvement vers l'avant, d'au moins une première roue (R) d'une première paire de roues du véhicule (V) à laver ;
- arrêt (a-2) du portique (20) devant la première roue (R) détectée antérieurement ;
- épandage (a-2) sur la première roue d'un produit spécifique (P) approprié afin de la laver, inversement (f2, f2') de manière programmée du sens de rotation de l'élément rotatif d'épandage (11) du dispositif de lavage (10) ;
- épandage (a-2), après une durée déterminée au préalable de sorte à permettre au produit spécifique épandu (P) d'agir, de jets d'eau sous pression (HP) sur la roue, inversement de manière programmée le sens de rotation de l'élément rotatif (11) ;
- avancée supplémentaire (a-3) du portique et détection, durant ce nouveau mouvement vers l'avant, d'au moins une deuxième roue (R) des roues résiduelles du véhicule à laver ;
- arrêt (a-4) du portique (20) devant la deuxième roue (R) détectée antérieurement ;
- épandage (a-4) sur la deuxième roue d'un produit spécifique (P) approprié afin de la laver, inversement (f2, f2') de manière programmée du sens de rotation de l'élément rotatif d'épandage (11) du dispositif de lavage (10) ;
- épandage, après une durée déterminée au préalable de sorte à permettre au produit spécifique épandu (P) d'agir, de jets d'eau sous pression (HP) sur la deuxième roue, inversement de manière programmée le sens de rotation de l'élément rotatif (11).

10. Cycle de lavage (B) des roues (R) d'un véhicule (V) réalisé avec un dispositif pour le lavage des roues (10) compris dans une installation (I) de lavage de véhicules et possédant :
- un élément rotatif (11) comprenant au moins un premier arbre rotatif (12) pour épandre de l'eau sous pression (HP) sur une roue (R) du véhicule (V), et au moins un deuxième bras rotatif (16) pour épandre, sur la même roue (R), un produit chimique spécifique (P) pour le lavage des roues du véhicule ;
- un premier circuit d'alimentation hydraulique (31) pour fournir l'eau sous pression (HP) audit élément rotatif (11, 12) ;
- un deuxième circuit d'alimentation hydraulique (32) pour fournir ledit produit spécifique (P) audit élément rotatif (11, 16) et
- un distributeur rotatif (19) pour relier ledit premier (31) et ledit deuxième (32) circuits d'alimentation audit élément rotatif (11) et distribuer l'eau sous pression (HP) ainsi que le produit spécifique (P) respectivement audit premier bras rotatif (12) et audit deuxième bras rotatif (16) ;
dans lequel ledit premier et ledit deuxième circuit d'alimentation (31, 32) sont réciproquement distincts sans avoir de quelconque conduite commune et sont configurés, ensemble avec ledit distributeur rotatif (19), de telle manière à fournir et distribuer, l'un séparément de l'autre, l'eau sous pression (HP) et le produit chimique spécifique (P), respectivement audit premier (12) et audit deuxième (16) bras rotatif de l'élément rotatif (11), le cycle de lavage des roues comprenant les étapes suivantes : durant un déplacement du portique (20) de l'installation de lavage (I) vers l'avant,
- avancée (b-1) du portique (20) et détection, durant ce mouvement vers l'avant, d'au moins une première roue (R') d'une première paire de roues du véhicule (V) à laver ;
- arrêt (b-2) du portique (20) devant la première roue (R'), détectée antérieurement ;
- épandage (b-2) sur la première roue d'un produit spécifique (P) approprié afin de la laver, inversement (f2, f2') de manière programmée du sens de rotation de l'élément rotatif d'épandage (11) du dispositif de lavage (10) ;
- avancée supplémentaire (b-3) du portique et détection, durant ce nouveau mouvement vers l'avant, d'au moins une deuxième roue (R") des roues résiduelles du véhicule à laver ;
- arrêt (b-4) du portique (20) devant la deuxième roue (R") détectée antérieurement ;
- épandage (b-4) sur la deuxième roue (R") d'un produit spécifique (P) approprié afin de la laver, inversement (f2, f2') de manière programmée du sens de rotation de l'élément rotatif d'épandage (11) du dispositif de lavage (10) ;
- bouclage (b-5) du déplacement du portique (20) vers l'avant ;
- durant un déplacement subséquent du portique (20) de l'installation de lavage (I) vers l'arrière
- déplacement initial (b-6) du portique (20) vers l'avant et arrêt de celui-ci devant la deuxième roue (R") détectée durant le déplacement vers l'avant antérieur ;
- épandage (b-4) de jets d'eau sous pression (HP) sur la deuxième roue (R"), inversement (f2, f2') d'une manière programmée du sens de rotation de l'élément rotatif (11) ;
- déplacement supplémentaire du portique (20) vers l'avant et arrêt de celui-ci (b-7) devant la première roue (R') détectée durant le déplacement vers l'avant antérieur ;
- épandage (b-7) de jets d'eau sous pression (HP) sur la deuxième roue (R"), inversement (f2, f2') d'une manière programmée du sens de rotation de l'élément rotatif (11).
